# EUROPEAN PATENT APPLICATION

(11) **EP 3 903 566 A1**
(43) Date of publication of application: **03.11.2021**
(21) Application number: 19902092.6
(22) Date of filing: 10.10.2019
(51) Int. Cl.: A01G 7/00

(54) **INFORMATION PROCESSING DEVICE, AND INFORMATION PROCESSING SYSTEM**

(30) Priority: 27.12.2018 JP 2018243832
(71) Applicant: Bayer CropScience K.K., Tokyo 100-8268 (JP)
(72) Inventor: ITO Satoshi, Tokyo 150-8360 (JP)
(74) Representative: BIP Patents
(86) International application number: PCT/JP2019/039928
(87) International publication number: WO 2020/137085

(57) **Abstract**

The present invention makes it possible to more accurately estimate information relating to crop infection, on the basis of more appropriate cultivation information. Provided is an information processing device (10) comprising: a feature quantity conversion unit (131) that generates a feature quantity by performing a feature quantity conversion of at least one of piece of information among information pieces relating to three factors causing disease in crops, namely a primary cause, a predisposition and an inducement; and an estimation unit (133) that estimates crop infection information.

## Description

### Technical Field

The present invention relates to an information processing device and an information processing system.

### Background Art

There is a reduction in yield and quality of produce when disease damage occurs in the produce. If it were possible to predict occurrences of disease damage in produce, this would make it possible to pre-empt the disease damage, for example by spraying the produce with an agrochemical at a suitable timing. Technology for predicting occurrences of disease damage in produce has been developed in the past.

For example, Patent Document 1 describes a method for forecasting an occurrence of disease damage, this method including processing to obtain an agrochemical spraying condition from an amount of an infection source that will cause disease damage to produce and a permitted damage percentage, and processing to determine the suitability of spraying the produce with the agrochemical. More specifically, Patent Document 1 describes technology for predicting an outbreak of disease on the basis of cultivation information such as air temperature, humidity or rainfall.

### Prior Art Documents

### Patent Documents

Patent Document 1: JP 2002-305971 A

### Summary of the Invention

### Problems to be Solved by the Invention

Once produce has become infected, there is generally an incubation period until disease damage occurs in the produce. In addition to the technology described in Patent Document 1 for predicting an occurrence of disease damage in produce, there is also a need for technology to estimate a risk of the produce becoming infected. That is to say, there is a need for technology to estimate occurrences of disease damage in produce, and to estimate infection information relating to infection of the produce, such as the risk of infection.

Patent Document 1 describes cultivation information for estimating information relating to occurrences of disease damage in produce, but there is a need for technology to more accurately estimate infection information relating to infection of the produce on the basis of more suitable cultivation information relating to cultivation of the produce.

The present invention has been devised in light of the problems mentioned above, and the objective of the present invention lies in providing a novel and improved information processing device and information processing system, which are capable of more accurately estimating information relating to infection of produce on the basis of more suitable cultivation information.

### Means for Solving the Problems

In order to solve the abovementioned problems, one aspect of the present invention provides an information processing device comprising: a feature value conversion unit for generating a feature value by performing feature value conversion of at least any item of information among items of information relating to each of three factors in disease outbreak in produce, namely a pathogen factor, host factor and environment factor; and an estimation unit for estimating infection information relating to infection of the produce on the basis of an infection estimation model which is used in order to estimate the infection information of the produce and is generated on the basis of a machine learning algorithm, using the information relating to the three factors including the feature value as input data.

Furthermore, the information processing device may further comprise a first machine learning unit which uses the information relating to the three factors including the feature value as input data and updates the infection estimation model on the basis of the machine learning algorithm, and the estimation unit may estimate the infection information on the basis of the updated infection estimation model.

Furthermore, the information relating to the pathogen factor may include information relating to a history of occurrences of disease damage in the produce.

Furthermore, the information relating to a history of occurrences of disease damage may include period information relating to a period in which disease damage has occurred in the produce.

Furthermore, the information relating to a history of occurrences of disease damage may include frequency information relating to a frequency with which disease damage occurs in the produce.

Furthermore, the information relating to a history of occurrences of disease damage may include length information relating to a length from a point in time on a time axis at which disease damage occurred in the produce until a point in time at which the estimation unit estimates the infection information.

Furthermore, the information relating to the host factor may include information relating to resistance of the produce to disease damage, and the information relating to the environment factor may include information relating to at least either of humidity or temperature in a space in which the produce is being cultivated.

Furthermore, the estimation unit may estimate the infection information on the basis of a past estimation result of the infection information estimated on the basis of the infection estimation model.

Furthermore, the information processing device may further comprise a second machine learning unit which uses the past estimation result as input data, and updates the infection estimation model on the basis of the machine learning algorithm, and the estimation unit may estimate the infection information on the basis of the updated infection estimation model.

The present invention also provides an information processing system comprising: an input unit which receives as input information relating to each of a pathogen factor, host factor and environment factor with respect to disease in produce; a feature value conversion unit for generating a feature value by performing feature value conversion of at least any item of information among items of information relating to each of three factors in disease outbreak in produce, namely the pathogen factor, host factor and environment factor; an estimation unit for estimating infection information relating to infection of the produce on the basis of an infection estimation model which is used in order to estimate the infection information and is generated on the basis of a machine learning algorithm, using the information relating to the three factors including the feature value as input data; and an output unit for outputting a result estimated by the estimation unit.

### Advantage of the Invention

As described above, the present invention provides a novel and improved information processing device and information processing system, which are capable of more accurately estimating information relating to infection of produce on the basis of more suitable cultivation information.

### Brief Description of the Drawings

[Fig. 1] is a diagram to illustrate the outline of an information processing system 1 according to a mode of embodiment of the present invention.
[Fig. 2] is a block diagram showing a schematic example of a functional configuration of the information processing system 1 according to a mode of embodiment of the present invention.
[Fig. 3] is a diagram showing a plant disease pyramid P.
[Fig. 4] is a diagram showing an example of a disease damage occurrence history screen displayed on an information processing terminal 20 according to a mode of embodiment of the present invention.
[Fig. 5] is a diagram showing an example of a disease damage occurrence history screen displayed on the information processing terminal 20 according to a mode of embodiment of the present invention.
[Fig. 6] is a diagram showing an example of an agrochemical spraying record screen displayed on the information processing terminal 20 according to a mode of embodiment of the present invention.
[Fig. 7] is a diagram showing an example of a disease occurrence information screen displayed on the information processing terminal 20 according to a mode of embodiment of the present invention.
[Fig. 8] is a diagram showing an example of a sowing information screen displayed on the information processing terminal 20 according to a mode of embodiment of the present invention.
[Fig. 9] schematically shows an example of a flow of overall processing in the information processing system 1 according to a mode of embodiment of the present invention.
[Fig. 10] is a flowchart schematically showing an example of update processing performed by the information processing device 10 according to a mode of embodiment of the present invention.
[Fig. 11] is a flowchart schematically showing an example of estimation processing in the information processing device 10 according to a mode of embodiment of the present invention.
[Fig. 12] is an explanatory diagram showing a hardware configuration of the information processing device 10 according to a mode of embodiment of the present invention.

### Mode for Implementing the Invention

A preferred mode of embodiment of the present invention will be described in detail below with reference to the appended drawings. It should be noted that constituent elements having substantially the same functional configuration in this specification and the drawings bear the same reference symbols and duplicate descriptions thereof will not be given.

### <1. Introduction>

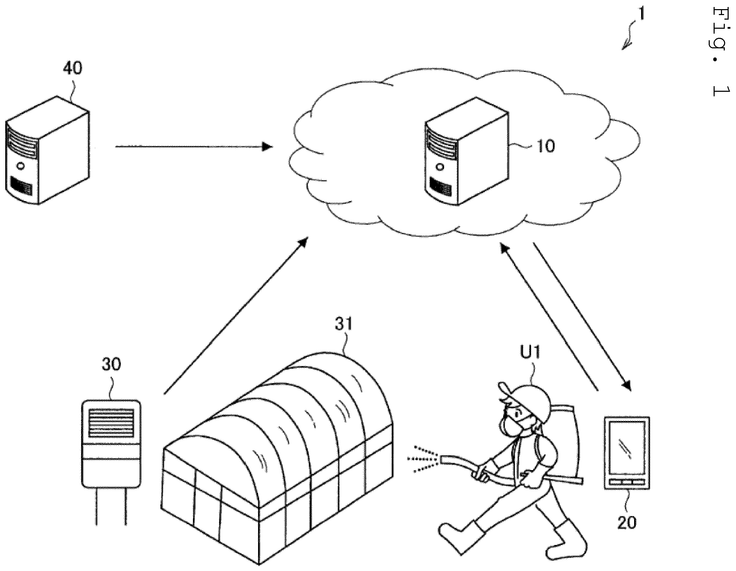

An information processing system 1 according to a mode of embodiment of the present invention will be described first of all with reference to fig. 1. Fig. 1 is a diagram to illustrate the outline of the information processing system 1 according to a mode of embodiment of the present invention.

The information processing system 1 has a function for collecting cultivation information of produce, a function for estimating infection information based on the cultivation information, and a function for presenting an estimation result. These functions are implemented by collaboration of an information processing device 10, an information processing terminal 20, and a sensor node 30 provided in the information processing system 1.

As shown in fig. 1, for example, the information processing device 10 collects: produce information, cultivation site information, disease damage information and agrochemical information from the information processing terminal 20 managed by means of a user U1 such as a grower of produce; cultivation site observation information from the sensor node 30 installed at a cultivation site 31; and also weather information from a weather information server 40. The various types of information mentioned above will be described in detail later. The information processing device 10 inputs the collected information to an infection estimation model and delivers output information from the infection estimation model to the information processing terminal 20. The user U1 inspects the delivered output information which is presented by means of the information processing terminal 20, and checks the infection information relating to the produce.

It should be noted that the infection information may be information relating to infection arising in the produce. More specifically, the infection information may be an infection risk indicating the risk of the produce becoming infected with a pathogenic microorganism, etc., for example. Alternatively, the infection information may be information relating to disease damage occurring in the produce. In this mode of embodiment, the information processing device 10 estimates the infection risk on the basis of the cultivation information.

It should be noted that the abovementioned functions of the information processing device 10 may be implemented by multiple devices. For example, the functions of the information processing device 10 may be implemented by means of cloud computing with a plurality of devices. Furthermore, fig. 1 illustrates an example in which the information processing terminal 20 is a portable communication terminal such as a smartphone, but the information processing terminal 20 may equally be an information communication device such as a stationary personal computer.

### <2. Mode of embodiment of the present invention>

An outline of the information processing system 1 according to a mode of embodiment of the present invention was described above. The details of the information processing system 1 according to a mode of embodiment of the present invention will be described next.

### <2.1. System configuration>

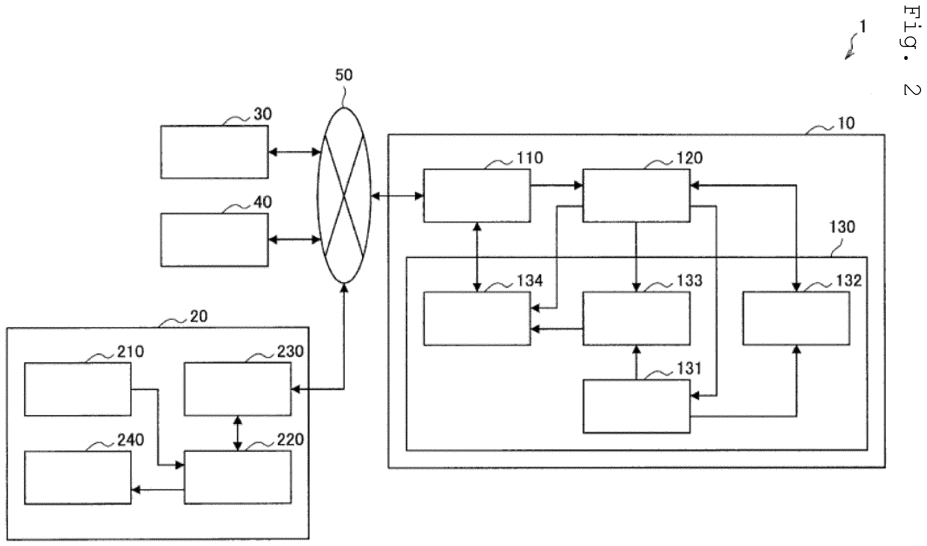

A functional configuration of the information processing system 1 will be described first of all with reference to fig. 2. Fig. 2 is a block diagram showing a schematic example of the functional configuration of the information processing system 1 according to a mode of embodiment of the present invention.

As shown in fig. 2, the information processing system 1 comprises the information processing device 10, the information processing terminal 20, and the sensor node 30. The information processing device 10, the information processing terminal 20, the sensor node 30, and the weather information server 40 which will be described later are connected via a network 50. The above devices are connected via a wide area network (WAN) such as the Internet, for example.

### [Information processing device]

The information processing device 10 has the function of generating a feature value by performing feature value conversion of at least any item of information among items of information relating to each of three factors in disease outbreak in produce, namely a pathogen factor, host factor and environment factor (also referred to below simply as the "three-factor information"). The information processing device 10 has a further function of estimating the infection risk of the produce on the basis of the infection estimation model which is used in order to estimate the infection risk of the produce and is generated on the basis of a machine learning algorithm, using the three-factor information including the feature value as input data. The functions of the information processing device 10 are implemented by collaboration of a communication unit 110, a memory unit 120 and a processing unit 130 provided in the information processing device 10.

The three factors in disease outbreak in the produce will be described here. Plant disease such as a disease of produce is considered to be caused by the compound action of all three factors, namely a pathogen factor, host factor and environment factor.

The pathogen factor will be described first of all. The pathogen factor (cause of disease: pathogen) refers to the cause of disease such as a pathogenic microorganism, pest, agrochemical, fertilizer, pollutant or weed. Furthermore, information relating to the pathogen factor may be a disease damage occurrence history, an after-effect of a sprayed agrochemical, a group of sprayed agrochemicals, or a number of spores of produce, etc., for example.

The host factor will be described next. The host factor (plant: host) is a factor relating to a plant and its resistance and growth stage, etc. Furthermore, information relating to the host factor may be information such as a growth stage of the produce, disease damage resistance of the produce, or characteristics of a rootstock, for example.

Lastly, the environment factor will be described. Environment factor information, which is information relating to the environment factor (surroundings: environment), is information relating to the environment in which the produce is being cultivated, such as the temperature or humidity. For example, the environment factor information is information including at least either of cultivation site observation information based on results detected by means of various types of sensors such as an atmosphere sensor or a soil sensor which will be described below, or information relating to various types of environments, such as information relating to planting density. For example, the atmosphere sensor is a sensor such as a temperature sensor or humidity sensor installed in a space in which the produce is being cultivated.

The three factors, namely the pathogen factor, host factor and environment factor, were each described above. The information relating to these three factors is sent to the information processing device 10 from the information processing terminal 20, sensor node 30, or weather information server 40. Moreover, information relating to the three factors which was not specifically described here may equally be input to the information processing terminal 20 by the user, and this input information may be sent via the network 50 to the information processing device 10, for example. Furthermore, a device other than the information processing terminal 20 may acquire the information relating to the three factors, and the acquired information may be sent to the information processing device 10 via the network 50, for example.

A plant disease pyramid, in which the above three factors and an amount of damage to a plant produced by plant disease are represented in the form of a model, is known in the art.

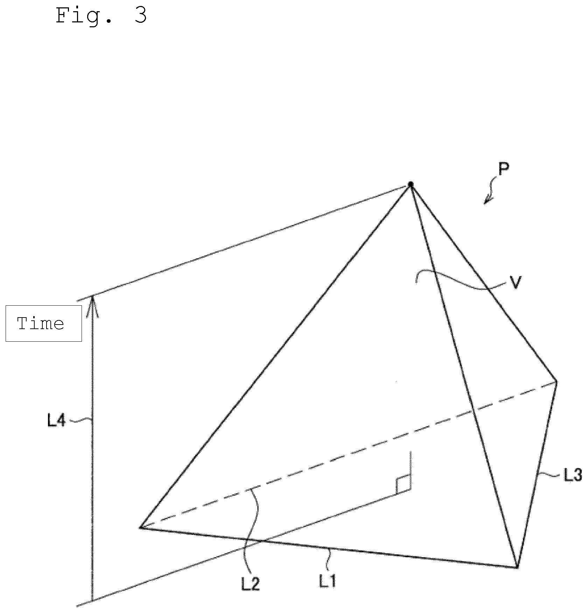

Fig. 3 is a diagram showing a plant disease pyramid P. In the plant disease pyramid P, the magnitudes of the effects of the three factors are represented by sides, and the surface area of the triangle which can be formed denotes damage to the plant at that point in time. More specifically, the magnitude of the effect of the pathogen factor is represented by the length of a first side L1, the magnitude of the effect of the host factor is represented by the length of a second side L2, and the magnitude of the effect of the environment factor is represented by the length of a third side L3. The surface area of a triangle enclosed by those three sides shows the magnitude of plant disease damage at a given point in time.

Furthermore, the final amount of damage produced by the plant disease is represented by a volume V of the plant disease pyramid P. More specifically, the volume V of a triangular pyramid in which the abovementioned triangle forms a bottom side and the height is a fourth side L4 represented by elapsed time is the final amount of damage produced by the plant disease. The amount of damage from the plant disease is thus determined in accordance with the impact of the three factors. Accordingly, the amount of damage to the produce produced by an outbreak of disease is determined in accordance with the impact of the three factors. Accordingly, using the three factors is of great significance in estimating the infection risk.

### (Communication unit)

The communication unit 110 communicates with the information processing terminal 20, the sensor node 30, and the weather information server 40. Specifically, the communication unit 110 receives the produce information, cultivation site information, disease damage information, agrochemical information, and request information from the information processing terminal 20. The produce information, cultivation site information, disease damage information and agrochemical information sent from the information processing terminal 20 to the communication unit 110 may include the three-factor information. Furthermore, the communication unit 110 receives the cultivation site observation information from the sensor node 30. The cultivation site observation information includes information relating to the environment factor, for example. The communication unit 110 additionally receives the weather information from the weather information server. The weather information includes information relating to the environment factor, for example. Furthermore, the communication unit 110 sends display information to the information processing terminal 20. The information processing terminal 20 displays the various types of information on the basis of the display information.

### (Memory unit)

The memory unit 120 stores information relating to processing of the processing unit 130. Specifically, the memory unit 120 records various types of cultivation information including the three-factor information received by means of the communication unit. More specifically, the memory unit 120 records the cultivation information (produce information, cultivation site information, disease damage information, agrochemical information, cultivation site observation information, and weather information). Furthermore, the memory unit 120 records the infection estimation model and machine learning parameters.

### (Control unit)

The processing unit 130 controls overall operation of the information processing device 10. Specifically, as shown in fig. 2, the processing unit 130 comprises: a feature value conversion unit 131, a machine learning unit 132, an estimation unit 133, and a display control unit 134, and performs processing relating to estimation of the infection risk. It should be noted that the estimation of the infection risk may involve estimating the infection risk of the produce at the current time, or it may involve predicting the future infection risk of the produce.

The feature value conversion unit 131 generates a feature value by performing feature value conversion of at least any item of information among items of information relating to each of the three factors in disease outbreak in the produce, namely the pathogen factor, host factor and environment factor. In the example described here, the feature value conversion unit 131 generates the feature value. It should be noted that the items of information relating to the pathogen factor, host factor and environment factor may each include a plurality of items of information. In the present specification, "at least any item of information among items of information relating to each of the three factors, namely the pathogen factor, host factor and environment factor" refers to at least any of this plurality of items of information. An exemplary case will be described in which the feature value conversion unit 131 performs feature value conversion of the information relating to the environment factor, among the pathogen factor, host factor and environment factor. It will be assumed that the information relating to the environment factor includes a plurality of items of information such as information relating to the detection result afforded by the atmosphere sensor and information relating to planting density. In this case, the feature value conversion unit 131 may perform feature value conversion of only the information relating to the detection result afforded by the atmosphere sensor, among the items of information relating to the environment factor. Of course, the feature value conversion unit 131 may also perform feature value conversion of the information relating to the environment factor other than this detection result, or it may perform feature value conversion of the other items of information relating to the environment factor, without performing feature value conversion of the detection result.

An example in which the feature value conversion unit 131 performs feature value conversion of the disease damage occurrence history will be described first of all. It should be noted that the disease damage occurrence history is information relating to the pathogen factor. The disease damage occurrence history is information in which a date on which disease damage occurred or the type of this disease damage, etc. has been recorded by the user, for example. The feature value conversion unit 131 extracts, from the disease damage occurrence history, information indicating how many days previously the disease damage occurred, for example, and generates this information as a feature value.

Furthermore, the disease damage may occur during a given period. The disease damage occurrence history therefore includes period information relating to the length of a period in which disease damage occurred in the produce. The feature value conversion unit 131 may generate the period in which the disease damage occurs as a feature value.

Furthermore, the disease damage occurrence history may include information relating to the frequency with which disease damage occurs. For example, it is estimated that the infection risk is increasing when the frequency with which disease damage occurs is gradually increasing. The frequency with which disease damage occurs may therefore serve as important information for estimating the infection risk. The feature value conversion unit 131 may then generate the frequency with which disease damage occurs as a feature value, in the form of: number of days on which disease damage occurred/predetermined number of days. More specifically, the feature value conversion unit 131 may generate the frequency with which disease damage occurs as a feature value, in the form of: number of days on which disease damage occurred/total number of days of cultivation.

Furthermore, the disease outbreak occurrence history may include length information relating to a length from a point in time on a time axis at which disease damage occurred in the produce until a point in time at which the estimation unit 133 which will be described later estimates the infection risk. For example, when this length is small, it may be estimated that the infection risk is higher, so this information may serve as important information for estimating the infection risk. The feature value conversion unit 131 may then generate, as a feature value from this length information, the period from the point in time at which the estimation unit 133 estimates the infection risk until the shortest point in time from among the points in time at which an outbreak of disease occurred in the produce.

A description will be given next of an example in which the feature value conversion unit 131 performs feature value conversion of detection results detected by means of the various types of sensors such as the atmosphere sensor or the soil sensor provided in the sensor node 30. It should be noted that these detection results may be information relating to the environment factor. For example, the feature value conversion unit 131 acquires a distribution of data relating to the detection results acquired in time series in a predetermined period, and outputs a representative value relating to this distribution as a feature value.

This representative value may be a percentile value, for example. The feature value conversion unit 131 may rearrange time series data of the detection results acquired in time series in a predetermined period in ascending order or descending order, and may output a predetermined percentile value of the rearranged data, for example. A feature value such as this may be used as one input data item for the infection estimation model.

Furthermore, various types of statistical representative values may be used as this representative value, such as a minimum, maximum, mean, mode, variance, or standard deviation, for example. The type of representative value used as input data for the infection estimation model may be appropriately set in accordance with characteristics of parameters for determining a subject of the infection risk estimation, or a trend in changes over time, etc.

Furthermore, there is no particular limitation as to setting of the abovementioned period, which is the period of acquisition of time series data of the detection results. The predetermined period may be a period from several days before the point in time at which the feature value conversion was performed until the point in time of the feature value conversion, or it may be a period from several months before the point in time at which the feature value conversion was performed until the point in time of the feature value conversion. This predetermined period may be appropriately set in accordance with disease damage infection behavior or occurrence behavior, or chemical agent efficacy behavior, etc.

An example of feature value conversion of the data detected by means of the sensors provided in the sensor node 30 was described above. An example of feature value conversion of information relating to planting density will be described next. It should be noted that the information relating to planting density may be information relating to the environment factor. The planting density is an index of the extent of crowding of the produce. A higher planting density generally produces high humidity, and there is an increased risk of the occurrence of filamentous fungal disease damage, for example. As the planting density increases, there is more likely to be a lack of sunlight or a lack of ventilation within clusters of plants, which has an effect on plant growth and the surrounding environment. Grouping planting densities is therefore significant for estimating the infection risk. For example, the feature value conversion unit 131 generates a feature value relating to the planting density by classifying the planting densities every ±200 plants/10 a around a planting density of 2000-2200 plants/10 a.

The information relating to planting density may be unmodified information of the planting density, or it may be a feature value generated by feature value conversion of information including the planting density.

An example in which the feature value conversion unit 131 generates a feature value was described above. The feature value conversion unit 131 outputs the generated feature value to the machine learning unit 132. In this case, the machine learning unit 132 generates or updates the infection estimation model while using the feature value as an input value. Furthermore, the feature value conversion unit 131 outputs the generated feature value to the estimation unit 133. In this case, the estimation unit 133 may input the feature value to the infection estimation model, output an estimation result from the infection estimation model, and transmit the estimation result to the display control unit 134. Furthermore, the generated feature value may be stored in the memory unit 120. It should be noted that the various types of cultivation information which have undergone feature value conversion here may also be used by the machine learning unit 132 or the estimation unit 133, without the feature value conversion having been performed.

The machine learning unit 132 generates or updates the infection estimation model on the basis of a predetermined machine learning algorithm. Specifically, the machine learning unit 132 uses the three-factor information stored in the memory unit 120 as input data, and generates or updates the infection estimation model on the basis of the machine learning algorithm (the above operations are also referred to collectively below simply as "machine learning"). It should be noted that the machine learning algorithm may be any kind of existing machine learning algorithm which can be used for machine learning of the infection estimation model. For example, the machine learning algorithm may be a classification technique such as logistic regression, a support vector machine, a random forest or the neighborhood method, or it may be a computational algorithm employing a neural network or a Bayesian network.

Specifically, the machine learning unit 132 acquires from the memory unit 120 the three-factor information including the feature value generated by means of the feature value conversion unit 131. It should be noted that the machine learning unit 132 may acquire the feature value from the feature value conversion unit 131. The machine learning unit 132 then generates the infection estimation model by using the three-factor information acquired. The infection estimation model generated by means of the machine learning unit 132 is stored in the memory unit 120.

It should be noted that the infection estimation model may be generated for each cultivation site. Specifically, disease damage information includes information indicating the cultivation site at which disease damage occurred, and the machine learning unit 132 generates the infection estimation model on the basis of the cultivation information corresponding to the cultivation site at which the disease damage occurred. For example, the machine learning unit 132 acquires from the memory unit 120 the three-factor information relating to the cultivation site indicated by the disease damage information. Additionally, the machine learning unit 132 generates the infection estimation model relating to produce at the cultivation site by using the three factors acquired.

Furthermore, the machine learning unit 132 may update an infection estimation model which has already been generated. More specifically, the machine learning unit 132 acquires information relating to the three factors including the feature value and the existing infection estimation model from the memory unit 120, and acquires the feature value from the feature value conversion unit 131. The machine learning unit 132 uses the acquired information as input data and updates the existing infection estimation model on the basis of the machine learning algorithm. The estimation unit 133 may estimate the infection risk with greater accuracy by using the updated infection estimation model. It should be noted that the function of the machine learning unit 132 for updating the infection estimation model is a function of a first machine learning unit.

The estimation unit 133 performs an estimation in regard to the risk of infection occurring in the produce. Specifically, the estimation unit 133 estimates the infection information relating to infection of the produce on the basis of the infection estimation model which is used in order to estimate the infection information of the produce and is generated on the basis of the machine learning algorithm, using the three-factor information including the feature value as input data. In this mode of embodiment, the infection information is information relating to the risk of infection of the produce. For example, the estimation unit 133 acquires from the memory unit 120 the infection estimation model and the three-factor information at a specific point in time, and inputs the three-factor information acquired to the infection estimation model. The estimation unit 133 then transmits to the display control unit 134 the information indicating the risk of infection occurring, which was output from the infection estimation model (also referred to below as the "estimation result").

Furthermore, the estimation unit 133 may also estimate the infection risk on the basis of a past estimation result of the infection risk estimated on the basis of the infection estimation model. More specifically, the estimation unit 133 may estimate the infection risk on the basis of the infection estimation model while using a past estimation result of the infection risk as input data. This enables the estimation unit 133 to estimate the infection risk with greater accuracy.

Furthermore, using a past estimation result as input data, the estimation unit 133 may estimate the infection risk by using the infection estimation model which has been updated on the basis of the machine learning algorithm. More specifically, the machine learning unit 132 first of all updates the infection estimation model on the basis of a predetermined machine learning algorithm while using, as input data, a past estimation result estimated by the estimation unit 133. The estimation unit 133 estimates the infection risk on the basis of the updated infection estimation model. The estimation unit 133 may thus use an infection estimation model which has been updated on the basis of a past estimation result, and can therefore estimate the infection risk with greater accuracy. It should be noted that the function of the machine learning unit 132 for updating the infection estimation model on the basis of a past estimation result is a function of a second machine learning unit.

The display control unit 134 generates information which is displayed on the information processing terminal 20. Specifically, the display control unit 134 generates display information for causing the information processing terminal 20 to display information relating to estimation results. For example, request information, which is information requesting transmission of display information, is sent to the information processing device 10 from the information processing terminal 20, and this request information is received by means of the communication unit 110. At this time, the display control unit 134 acquires an estimation result relating to a cultivation site specified on the basis of the request information, in a period which is specified from the request information. The display control unit 134 then generates the display information by processing the estimation result acquired, and transmits the display information generated to the communication unit 110. Furthermore, the estimation result may equally be transmitted without being processed.

Cultivation information corresponding to the estimation result displayed may further be added as the display information. For example, the display control unit 134 acquires from the memory unit 120 the cultivation information (weather information or agrochemical information, etc.) which was the input in the estimation processing for which the acquired estimation result was the output. The display control unit 134 then generates the display information by processing the cultivation information acquired, and transmits the generated display information to the communication unit 110. It should be noted that the cultivation information may also be transmitted to the communication unit 110 without being processed.

### [Information processing terminal]

The information processing terminal 20 has the functions of sending information generated in accordance with a user operation to the information processing device 10 via the network 50, and of displaying various types of information relating to the produce in accordance with control performed by the information processing device 10. The functions of the information processing terminal 20 are implemented by collaboration of an input unit 210, a control unit 220, a communication unit 230, and a display unit 240, which are shown in fig. 2.

The input unit 210 receives operations in relation to the information processing terminal 20. Specifically, the input unit 210 receives an input operation and generates various types of information in accordance with the operations received. The various types of information which are generated are sent to the control unit 220. Specifically, the items of information generated in accordance with user operations are the disease damage information, agrochemical information, produce information, cultivation site information, and request information. These items of information will be described more specifically here.

The disease damage information is information relating to disease damage that has occurred in the produce. The disease damage information includes information indicating the type of disease damage that has occurred, such as gray mold, leaf mold, powdery mildew, or blight. It should be noted that disease damage is a microbial disease, a physiological disorder, or a physiological disorder caused by weeds, etc. Furthermore, the disease damage information includes information indicating the date of occurrence of disease damage, or the extent of the occurrence. The disease damage occurrence history is generated by suitably combining these items of disease damage information. The disease damage occurrence history is information indicating the type of disease damage which has occurred in the produce, and the date or time at which the disease damage occurred, etc.

It should be noted that an image acquisition device may be installed at the cultivation site 31, and this image acquisition device may acquire image information of the produce and send the image information to the information processing device 10 via the network 50. By analyzing the image information, the information processing device 10 may determine whether or not disease damage is occurring in the produce and may generate the disease damage occurrence history. Furthermore, disease damage which has occurred in the produce may be estimated on the basis of indirect facts, and the disease damage occurrence history may be generated on the basis of the estimated information. For example, if a user such as a farmer who is growing the produce at the cultivation site 31 has become ill, disease damage may be the cause of this illness. It may then be estimated that disease damage is occurring in the produce, based on the illness. Additionally, the disease damage occurrence history may be generated on the basis of this estimation result.

The agrochemical information is information relating to agrochemicals which are sprayed. More specifically, the agrochemical information is information indicating the name, type, group or effect, spraying date or spraying amount of a sprayed agrochemical. The information processing terminal 20 estimates the after-effect of the agrochemical on the basis of spraying information such as the name and spraying date, etc. of the agrochemical which has been sprayed. Furthermore, the user may input the agrochemical group by means of the information processing terminal 20, and the information processing terminal 20 may estimate the agrochemical group on the basis of the name of the agrochemical, etc. input by the user. It should be noted that the after-effect of the agrochemical and the agrochemical group may be included in the information relating to the host factor.

Furthermore, the after-effect of the agrochemical is the effect of the agrochemical sprayed on the produce which remains in the produce. The after-effect of the agrochemical may be calculated on the basis of the date on which the agrochemical was sprayed and the name of the agrochemical sprayed. For example, the name of the agrochemical is input to the information processing terminal 20 by the user as agrochemical information. This information is sent to the information processing device 10 via the network 50. Here, the name of the agrochemical and information relating to a change over time of the efficacy of the agrochemical are stored in the information processing device 10. The information processing device 10 may calculate the after-effect of the agrochemical on the basis of the name of the agrochemical and the information relating to a change over time of the efficacy of the agrochemical, which have been acquired from the information processing terminal 20.

Furthermore, the agrochemical group refers to a conversion of an agrochemical having an after-effect to information relating to a compound group. Here, the information processing device 10 stores a database in which names of agrochemicals are associated with agrochemical groups. For example, the information processing device 10 may convert the name of an agrochemical acquired from the information processing terminal 20 to information relating to an agrochemical group, on the basis of this database.

The produce information is information relating to the produce being grown at the cultivation site 31. More specifically, the produce information is information indicating the growth stage, species and variety of the produce, disease damage resistance, planting density, variety and characteristics of the rootstock, and the extent of thinning or vigor of the leaves, etc.

The information relating to the growth stage of the produce is information relating to the phase of growth of the produce, such as the seeding date, settled planting date, harvesting start date or cultivation end date of the produce, etc. These items of information may be input to the information processing terminal 20 by the user as the produce information.

The disease damage resistance of the produce is a characteristic relating to resistance of the produce to various types of disease damage. Disease damage resistance may be generated by the information processing device 10 on the basis of information input by the user. For example, a database indicating resistance of each variety of produce to disease damage is stored in advance in the information processing device 10. For example, the user inputs information relating to the variety of produce to the information processing terminal 20 as produce information. This information is sent to the information processing device 10 via the network 50. The information processing device 10 may generate information relating to disease damage resistance of the produce on the basis of the information which has been sent, and the database. Furthermore, the disease damage resistance may be directly input to the information processing terminal 20 by the user and sent to the information processing device 10.

Furthermore, the information relating to characteristics of the rootstock may be information indicating which variety of rootstock is used for the rootstock of the produce. More specifically, the information relating to the characteristics of the rootstock may be information indicating the name of the variety of rootstock or characteristics of the variety of rootstock.

The cultivation site information is information indicating the elevation of the cultivation site, the weather characteristics, the soil type or the nutritional state of the soil, etc. It should be noted that the cultivation site information may be information relating to a single cultivation site, or it may be information relating to multiple cultivation sites. These items of cultivation site information may be included in the information relating to the environment factor.

The request information is information indicating a request to the information processing device 10 for transmission of display information. For example, an input screen is displayed by the display unit 240 and a user operates the input screen, whereby the various types of information described above are generated.

The control unit 220 controls overall operation of the information processing terminal 20. Specifically, the control unit 220 controls operations of the communication unit 230 and the display unit 240. For example, the control unit 220 causes the communication unit 230 to send the information generated by the input unit 210. Furthermore, the control unit 220 generates image information on the basis of display information transmitted from the information processing device 10, and causes an image to be displayed by transmitting the image information to the display unit 240.

The communication unit 230 communicates with the information processing device 10. Specifically, the communication unit 230 sends, to the information processing device 10, the produce information, cultivation site information, disease damage information, agrochemical information, and request information generated by means of the input unit 210. Furthermore, the communication unit 230 receives display information from the information processing device 10. It should be noted that the information processing terminal 20 may communicate with the sensor node 30 or the weather information server 40, and receive cultivation site observation information or weather information.

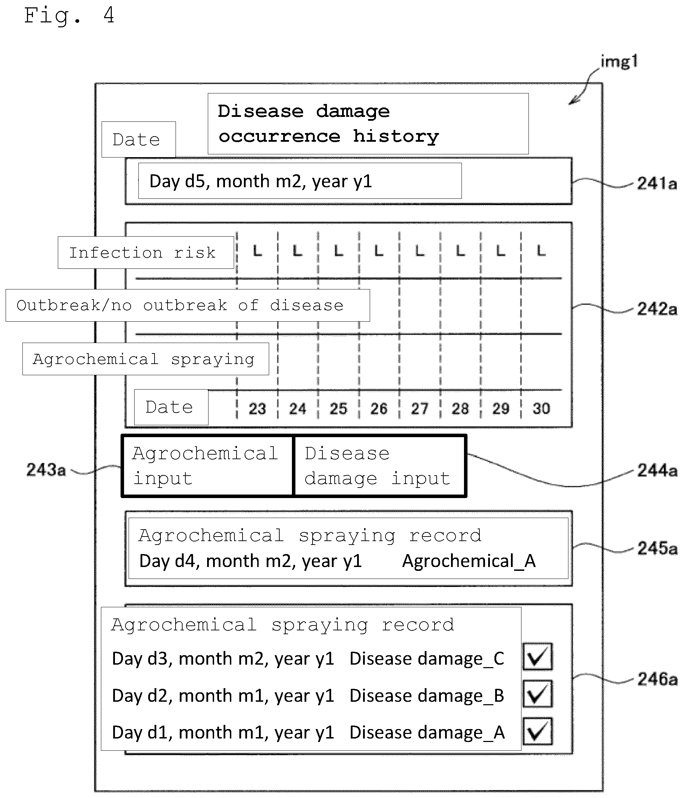

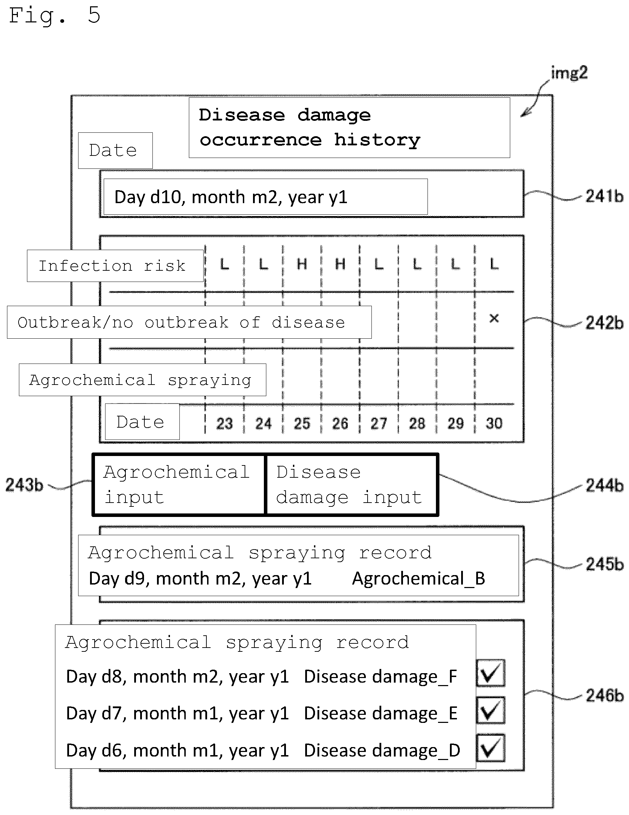

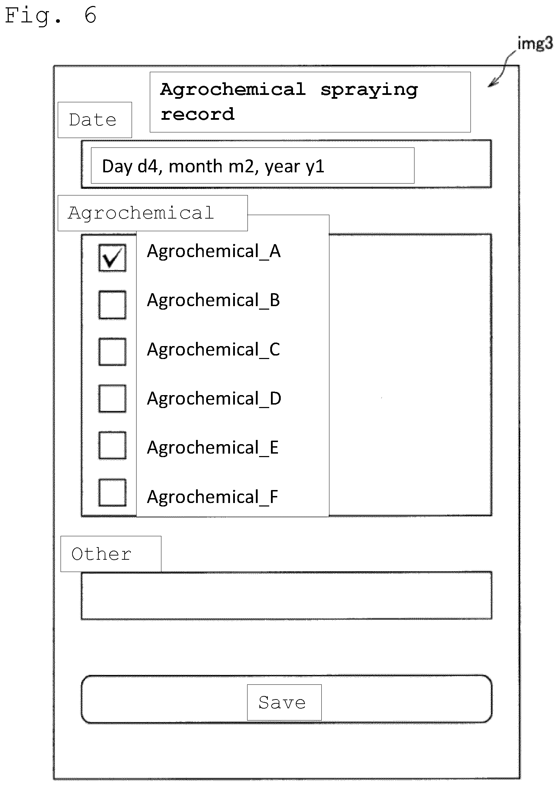

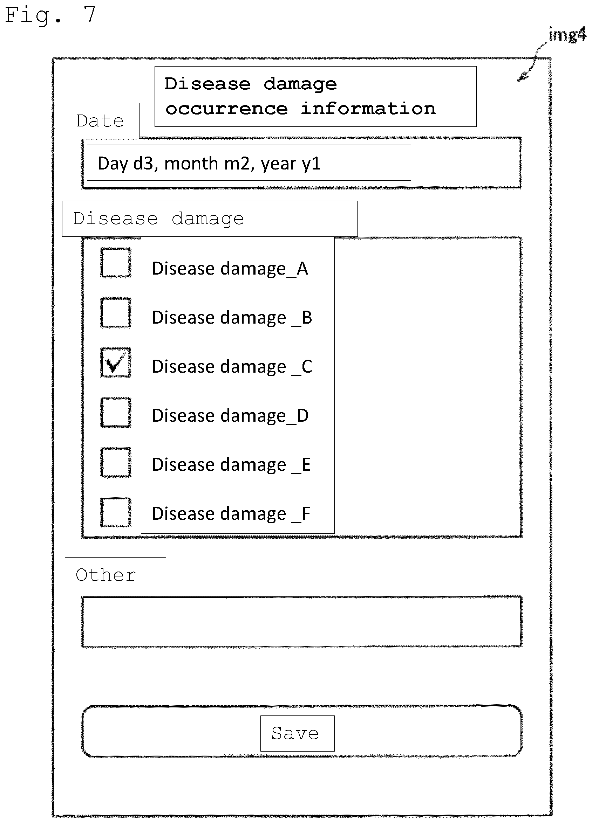

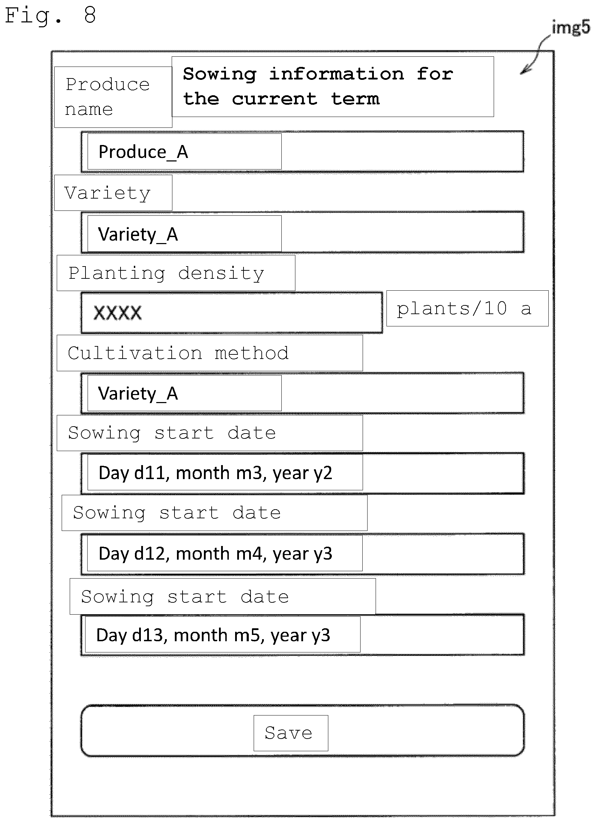

The display unit 240 serves as an output unit in this mode of embodiment, displaying images on the basis of an instruction from the control unit 220. Specifically, the display unit 240 displays an information display screen and an operation input screen on the basis of the image information transmitted from the control unit 220. For example, the display unit 240 displays a disease damage occurrence history screen, an agrochemical spraying record screen, a disease damage occurrence information screen, or a sowing information screen. These screens will be described more specifically with reference to fig. 4 to fig. 8. Fig. 4 and fig. 5 are diagrams each showing an example of the disease damage occurrence history screen which is displayed on the information processing terminal 20 according to a mode of embodiment of the present invention. Fig. 6 is a diagram showing an example of the agrochemical spraying record screen which is displayed on the information processing terminal 20 according to a mode of embodiment of the present invention. Fig. 7 is a diagram showing an example of the disease damage occurrence information screen which is displayed on the information processing terminal 20 according to a mode of embodiment of the present invention. Fig. 8 is a diagram showing an example of the sowing information screen which is displayed on the information processing terminal 20 according to a mode of embodiment of the present invention.

### (Disease damage occurrence history screen)

By means of the control unit 220, the display unit 240 displays the disease damage occurrence history screen for each cultivation site on the basis of various types of information input by the user and image information generated on the basis of the estimation results of the information processing device 10. More specifically, the disease damage occurrence history screen is a screen img1 such as shown in fig. 4, which displays the history of occurrences of disease damage, the infection risk estimation result, and a record relating to spraying of agrochemicals, etc. More specifically, the disease damage occurrence history screen img1 displays, in succession from the top: a date image 241a, an estimation result image 242b, an agrochemical input button 243a, a disease damage input button 244a, an agrochemical record image 245a, and a disease damage record image 246a.

The date image 241a displays the date on which the disease damage occurrence history screen img1 is being displayed on the display unit 240, for example. In the example shown in fig. 4, the date image 241a displays day d5, month m2, year y1 as the date.

The estimation result image 242a displays, in succession from the top, the infection risk, outbreak/no outbreak of disease (occurrence/no occurrence of disease damage), and agrochemical spraying/no agrochemical spraying, for various dates (in the example shown in fig. 4, the dates for days 23-30, month m2, year y1). The infection risk row in the estimation result screen 242a is displayed in the form of characters, graphics or symbols, etc., based on the estimation result estimated by means of the information processing device 10. When the infection risk is high, for example, the character "H" is displayed, and when the infection risk is low, the character "L" is displayed. In the example shown in fig. 4, it is estimated that the infection risk is low on days 23-30, month m2, year y1. The character "L" is therefore displayed in fields of the infection risk row corresponding to days 23-30, month m2, year y1.

Furthermore, in the outbreak/no outbreak of disease row, a sign such as a cross, for example, indicating that there was an outbreak of disease is displayed in fields corresponding to days on which there was an outbreak of disease in the produce. On the other hand, fields corresponding to days on which there was no outbreak of disease in the produce are blank. Accordingly, the fields corresponding to days 23-30, month m2, year y1 being blank in the outbreak/no outbreak of disease row indicates that there was no outbreak of disease in the produce on days 23-30, month m2, year y1. Since there was no outbreak of disease in the produce, the infection risk on days 23-30, month m2, year y1 is estimated as low.

Furthermore, in the agrochemical spraying row, a symbol such as a circle, for example, indicating that an agrochemical was sprayed is displayed in fields corresponding to days on which the agrochemical was sprayed. Furthermore, in the agrochemical spraying row, fields corresponding to days on which no agrochemicals were sprayed are blank. Accordingly, the fields corresponding to days 23-30, month m2, year y1 being blank in the agrochemical spraying row indicates that no agrochemicals were sprayed on days 23-30, month m2, year y1.

When the agrochemical input button 243a is operated by the user, the screen displayed on the display unit 240 is switched from the image img1 to a screen img3 which is an example of the agrochemical spraying record screen shown in fig. 6. Furthermore, when the disease damage input button 244a is operated by the user, the screen displayed on the display unit 240 switches from the image img1 to the screen img4 which is an example of the disease damage occurrence information screen shown in fig. 7.

Furthermore, the screen img1 displays the agrochemical record image 245a or the disease damage record image 246a which show, in time series, a record of spraying of agrochemicals or a record of occurrences of outbreaks of disease. For example, the agrochemical record image 245a displays an image indicating that an agrochemical _B was sprayed on day d9, month m2, year y1. Furthermore, the disease damage record image 246a displays, in time series, an indication that disease damage_D, E and F occurred.

A screen img2 will be described next with reference to fig. 5 as a different example of the disease damage occurrence history screen from the screen img1 described above. Like the screen img1, the screen img2 displays, in succession from the top: a date image 241b, an estimation result image 242b, an agrochemical input button 243b, a disease damage input button 244b, an agrochemical record image 245b, and a disease damage record image 246b. The estimation result image 242b which differs between the screen img1 and the screen img2 will be described here.

In the estimation result image 242b, a cross sign indicating that there was an outbreak of disease is displayed in fields corresponding to days 23 and 24 of the outbreak/no outbreak of disease row. The information processing device 10 receives the information that there was an outbreak of disease on days 23 and 24, and estimates that the infection risk is high on days 25 and 26. The character "H" indicating that the infection risk is high is therefore displayed in fields of the infection risk row corresponding to days 25 and 26. Furthermore, the fields corresponding to days 25-29 in the outbreak/no outbreak of disease row are blank to indicate that there was no outbreak of disease. The information processing device 10 receives the information that there was no outbreak of disease on days 25-29, and estimates that the infection risk is low on days 27-30. The character "L" is therefore displayed in fields of the infection risk row corresponding to days 27-30. However, a cross sign indicating that there was an outbreak of disease is displayed on day 30. Once produce has become infected, there is generally an incubation period until disease damage occurs in the produce. For example, an outbreak of disease may occur in produce after around 4-5 days have elapsed from infection of the produce. It will be understood from the example shown in fig. 5 that the estimation of the infection risk by the information processing device 10 was correct. That is to say, as estimated by the information processing device 10, the produce became infected on day 25 or 26, and there was an outbreak of disease in the produce on day 30, 4-5 days after the days of infection.

### (Agrochemical spraying record screen)

The display unit 240 displays the agrochemical spraying record screen on the basis of the image information generated by means of the control unit 220. The screen img3 such as shown in fig. 6, for example, which is displayed when the user records agrochemicals that have been sprayed, serves as the agrochemical spraying record screen. The user inputs the agrochemical information, etc. to the information processing terminal 20 by referring to the screen img3. For example, the date on which the agrochemical was sprayed is input to the date box given at the top of the screen img3. The user selects the type of agrochemical which was sprayed from among six types of agrochemicals_A-F given in the agrochemical box, and checks a checkbox. The checkbox for the agrochemical_A is checked in the example shown in fig. 6. Notes, etc. relating to the agrochemical sprayed, etc. are entered in the other box displayed below the agrochemical box.

When the save button is operated, the information entered in the screen img3, such as the date of spraying of the agrochemical, the type of agrochemical sprayed (the agrochemical_A in the example shown in fig. 6), and notes, etc. relating to the agrochemical sprayed, is input to the information processing terminal 20 as agrochemical information. The information input to the information processing terminal 20 is sent to the information processing device 10 via the network 50 and stored in the information processing device 10.

It should be noted that the type of agrochemical is entered in the agrochemical box shown in fig. 6, but this is not limiting, and the name, group or effect of the agrochemical, or the amount of agrochemical sprayed, etc. may equally be disclosed in the agrochemical box. Furthermore, six types of agrochemicals are given in the agrochemical box shown in fig. 6, but 1-5 types of agrochemicals may be given, or 7 or more types of agrochemicals may also be given.

### (Disease damage occurrence information screen)

The display unit 240 displays the disease damage occurrence information screen on the basis of the image information generated by means of the control unit 220. A screen img4 for recording disease damage that has occurred in the produce such as shown in fig. 7, for example, serves as the disease damage occurrence information screen. For example, the date on which the disease damage occurred is input to the date box given at the top of the screen img4. The user selects the type of disease damage which occurred from among six types of disease damage_A-F displayed in the disease damage box, and checks a checkbox. The checkbox for the disease damage_C is checked in the example shown in fig. 7. Furthermore, notes, etc. relating to the extent of the disease damage, etc. are entered in the other box.

When the save button is operated, the information entered in the screen img4, such as the date on which disease damage occurred, the type of disease damage, and notes, etc., is input to the information processing terminal 20 as disease damage information. The input information is sent to the information processing device 10 via the network 50 and stored in the information processing device 10.

It should be noted that six types of disease damage are given in the disease damage box shown in fig. 7, but 1-5 types of disease damage may be given, or 7 or more types of disease damage may also be given. Alternatively, an image for inputting the extent of disease damage may be displayed on the disease damage occurrence information screen.

### (Sowing information screen)

The display unit 240 displays the sowing information screen on the basis of the image information generated by means of the control unit 220. A screen img5 such as shown in fig. 8, for example, for recording sowing information for the current term serves as the sowing information screen. The screen img5 displays, in succession from the top, boxes for inputting: produce name, variety, planting density, cultivation method, sowing start date, harvesting start date and harvesting end date. Produce_A is entered in the produce name box as the species of produce. Furthermore, variety _A is input to the variety box as the variety of produce. Furthermore, XXXX plants/10 a is input to the planting density box as the planting density of the produce. Furthermore, cultivation method _A (e.g., drip fertigation, etc.) is input to the cultivation method box. Additionally, corresponding dates are entered into each of the boxes for sowing start date, harvesting start date and harvesting end date.

When the user operates the save button on the screen img5, the information entered on the screen img5 is input to the information processing terminal 20 as the produce information. The input information is sent to the information processing device 10 via the network 50 and stored in the information processing device 10.

It should be noted that the sowing information screen may equally be a screen enabling input of items other than the items displayed on the screen img5. For example, the sowing information screen may also display items for entry such as seeding date, settled planting date, cultivation end date, variety of rootstock, or characteristics of the rootstock, etc. The user can enter information corresponding to these items, and when the user presses the save button, for example, the information entered can be sent to the information processing device 10 via the network 50 and stored in the information processing device 10.

It should be noted that the information recorded by using the disease damage occurrence history screen, the agrochemical spraying record screen, the disease damage occurrence information screen and the sowing information screen is stored in the information processing device 10. This is not limiting, and the information processing terminal 20 may equally store the information entered using the abovementioned screens.

### [Sensor node]

The sensor node 30 is installed at the produce cultivation site 31. Furthermore, the sensor node 30 comprises a signal processing unit and a communication unit. Sensors generate signals by performing observations in relation to the environment around the sensors. For example, the sensors are various types of well-known sensors, such as a temperature sensor, a humidity sensor, a solar radiation sensor, a carbon dioxide concentration sensor, or a soil moisture sensor. A soil sensor is a sensor for detecting information relating to the soil, such as a soil moisture sensor or a soil pH sensor. Furthermore, the sensors for generating environment factor information may be sensors such as a solar radiation sensor or a humidity sensor.

The signal processing unit generates cultivation site observation information on the basis of signals generated by the sensors. Specifically, the signal processing unit generates the cultivation site observation information by performing signal processing such as sampling or filtering in relation to signals obtained from the sensors. It should be noted that the cultivation site observation information which is generated may be digital data or analog data.

The communication unit communicates with the information processing device 10. Specifically, the communication unit sends the cultivation site observation information generated by means of the signal processing unit to the information processing device 10 via the network 50. It should be noted that the communication unit may send the cultivation site observation information each time that information is generated, or it may send the cultivation site observation information at predetermined time intervals. Alternatively, the communication unit may send the cultivation site observation information in accordance with a request from the information processing device.

Furthermore, the sensor node 30 may send information relating to the number of spores of produce as measured by means of a spore counter provided at the cultivation site 31. More specifically, the sensor node 30 sends information relating to the measured number of spores as cultivation site observation information to the information processing device 10 via the network 50.

### [Weather information server]

The weather information server 40 transmits weather information to an external device. Specifically, when there is a request from the information processing device 10 for transmission of weather information, the weather information server 40 sends the requested weather information to the information processing device 10. For example, the weather information is information indicating the air temperature, humidity, amount of solar radiation or rainfall. These items of weather information may be information relating to the environment factor among the three factors.

### <2.2. System processing>

The processing in the information processing system 1 will be described next.

### (Overall processing)

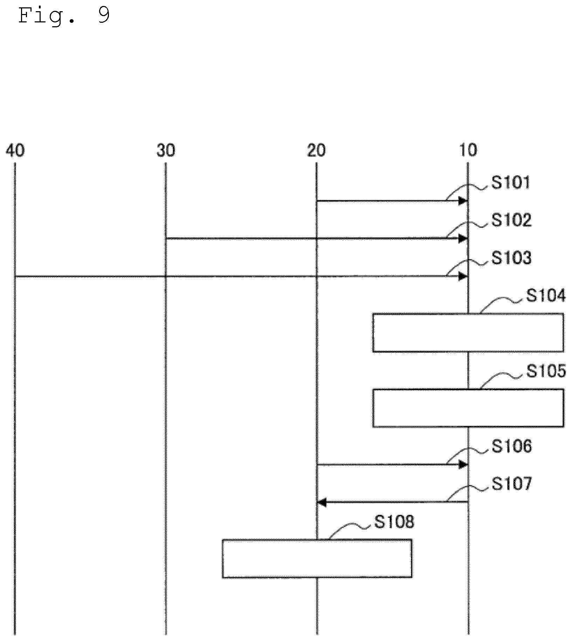

A flow of the overall processing in the information processing system 1 according to a mode of embodiment of the present invention will be described first of all with reference to fig. 9. Fig. 9 schematically shows an example of the flow of the overall processing in the information processing system 1 according to a mode of embodiment of the present invention.

The information processing terminal 20 first of all sends the produce information, cultivation site information, disease damage information, and agrochemical information to the information processing device 10 (step S101). Specifically, the communication unit 230 sends, to the information processing device 10, the produce information, cultivation site information, disease damage information, and agrochemical information generated by means of the input unit 210 on the basis of user operations.

The sensor node 30 then sends the cultivation site observation information to the information processing device 10 (step S102). Specifically, the sensor node 30 sends to the information processing device 10 the cultivation site observation information generated on the basis of signals obtained by means of the sensors.

The weather information server 40 then sends the weather information to the information processing device 10 (step S103). Specifically, the weather information server 40 generates the weather information or acquires the weather information from another device. The weather information server 40 sends the weather information to the information processing device 10 either periodically or in accordance with a request from the information processing device 10.

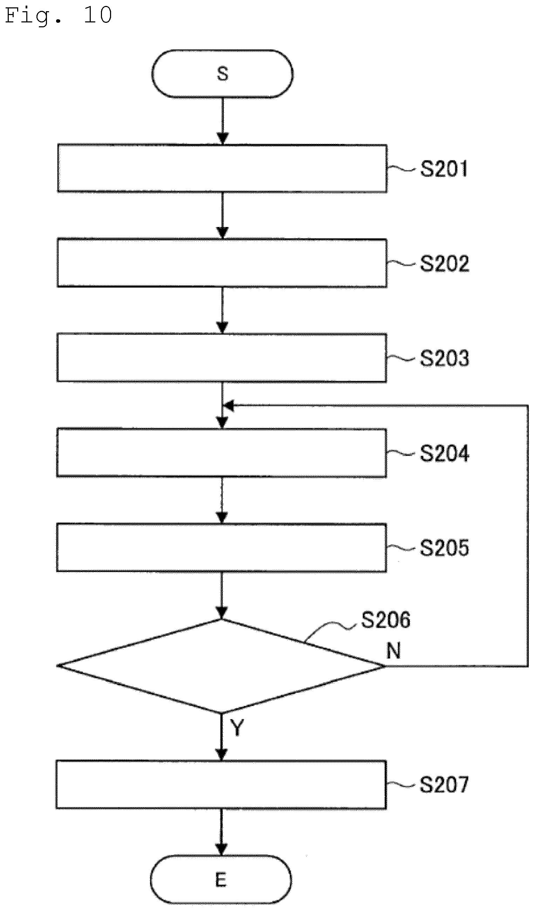

The information processing device 10 then performs update processing of the infection estimation model by using the information received (step S104). Specifically, the communication unit 110 causes the memory unit 120 to store the cultivation site information sent from the information processing terminal 20, the sensor node 30 and the weather information server 40. The machine learning unit 132 then updates the infection estimation model by using the stored cultivation information. It should be noted that the details of this processing will be described later with reference to fig. 10.

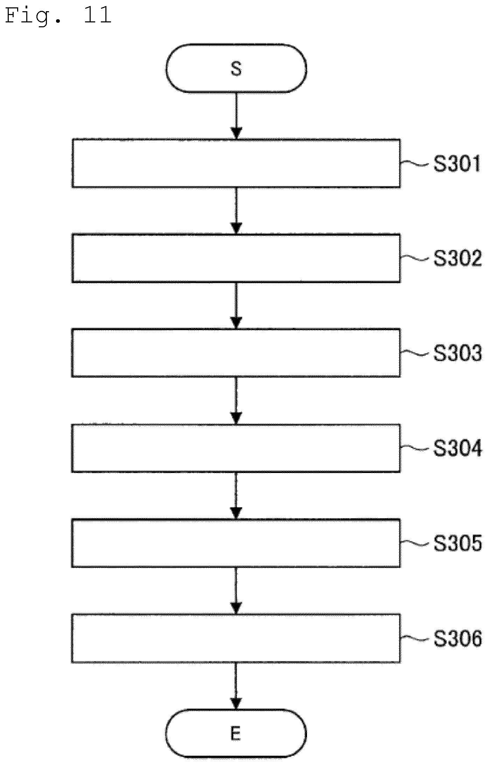

The information processing device 10 then performs an estimation in regard to the infection risk by using the infection estimation model (step S105). Specifically, the estimation unit 133 inputs the three-factor information including the feature value to the infection estimation model. More specifically, the estimation unit 133 inputs to the infection estimation model the three-factor information including the feature value which was generated by means of the feature value conversion unit 131. The estimation unit 133 causes the memory unit 120 to store the estimation result output from the infection estimation model. It should be noted that the details of this processing will be described later with reference to fig. 11.

The information processing terminal 20 then sends request information in regard to the infection risk estimation result to the information processing device 10 (step S106). Specifically, the communication unit 230 sends, to the information processing device 10, request information in regard to display information relating to the infection risk estimation result, the request information being generated by means of the input unit 210 on the basis of a user operation.

The information processing device 10 then sends display information to the information processing terminal 20 in response to the request information received (step S107) . Specifically, when the request information is received by means of the communication unit 110, the display control unit 134 generates the display information on the basis of the estimation result stored in the memory unit 120. The display control unit 134 causes the communication unit 110 to send the generated display information to the information processing terminal 20.

The information processing terminal 20 displays the infection risk estimation information on the basis of the received display information (step S108). Specifically, the control unit 220 generates image information from the display information received by means of the communication unit 230, and transmits the generated image information to the display unit 240. The display unit 240 displays the estimation result screen on the basis of the transmitted image information. The estimation result screen may be a screen for displaying the level of the infection risk such as shown in fig. 4 or fig. 5.

### (Machine learning processing)

The flow of overall processing in the information processing system 1 according to a mode of embodiment of the present invention was described above. The flow of update processing performed by the information processing device 10, which is the processing in step S104, will be described in detail next, with reference to fig. 10. Fig. 10 is a flowchart schematically showing an example of update processing performed by the information processing device 10 according to a mode of embodiment of the present invention.

The information processing device 10 acquires the three-factor information (step S201) . Specifically, the feature value conversion unit 131 acquires the cultivation information including the three-factor information which is stored in the memory unit 120. Furthermore, the machine learning unit 132 also acquires the cultivation information including the three-factor information which is stored in the memory unit 120, as required.

Furthermore, the information processing device 10 generates a feature value by performing feature value conversion of at least any item of information in the three-factor information, and outputs the generated feature value (step S202). Specifically, the feature value conversion unit 131 generates the feature value by performing feature value conversion of at least any item of information in the three-factor information, which is included in the acquired cultivation information, and outputs the generated feature value to the machine learning unit 132. At this time, the feature value conversion unit 131 may store the generated feature value in the memory unit 120.

Furthermore, the information processing device 10 acquires the existing infection estimation model (step S203). Specifically, the machine learning unit 132 acquires the infection estimation model stored in the memory unit 120.

The information processing device 10 then uses the three-factor information including the feature value to update the infection estimation model (step S204) . Specifically, the machine learning unit 132 acquires the machine learning algorithm stored in the memory unit 120. The machine learning unit 132 updates the infection estimation model on the basis of the acquired machine learning algorithm, while using the three-factor information including the feature value as input data. It should be noted that this input data may be information comprising only the feature value generated by means of the feature value conversion unit 131, or the input data may be information in which the feature value is combined with the three-factor information that has not undergone feature value conversion.

The information processing device 10 then calculates the correctness of the updated infection estimation model (step S205). Specifically, the machine learning unit 132 inputs test input data to the infection estimation model which was updated in step S204, and calculates the correctness of the model by comparing an output value with test output data. The test input data may be information comprising only the feature value generated by means of the feature value conversion unit 131, or the test input data may be information in which the feature value is combined with the three-factor information that has not undergone feature value conversion.

The machine learning unit 132 then determines whether or not a calculated value which was calculated in step S205 is equal to or greater than a predetermined threshold which is defined in advance (step S206). If the calculated value is equal to or greater than the threshold (step S206/Y), then the information processing device 10 stores the updated infection estimation model (step S207). Specifically, when the calculated correctness is equal to or greater than the threshold, the machine learning unit 132 causes the memory unit 120 to store the new infection estimation model. It should be noted that if the calculated value is less than the threshold (step S206/N), the processing is once again implemented in step S204.

### (Estimation processing)

The flow of estimation processing performed by the information processing device 10 will be described in detail next with reference to fig. 11. Fig. 11 is a flowchart schematically showing an example of estimation processing in the information processing device 10 according to a mode of embodiment of the present invention.

The information processing device 10 sets parameters in regard to subjects of the infection risk estimation (step S301). Specifically, the estimation unit 133 sets parameters such as the cultivation site, produce name, disease damage name, and estimation period, for example. It should be noted that the parameters which are set may equally be parameters other than those above, and parameters different from the parameters above may be added, or the parameters mentioned above may be omitted.

The information processing device 10 then acquires cultivation information in a specified period from the parameters (step S302) . Specifically, the estimation unit 133 acquires cultivation information corresponding to the set cultivation site, produce name, and disease damage name, in the set estimation period.

The information processing device 10 then generates a feature value by performing feature value conversion of at least any item of information in the three-factor information, and outputs the generated feature value (step S303). Specifically, the feature value conversion unit 131 acquires the cultivation information including the three-factor information from the memory unit 120. The feature value conversion unit 131 generates the feature value by performing feature value conversion of at least any item of information in the three-factor information, which is included in the acquired cultivation information, and outputs the generated feature value to the estimation unit 133.

The information processing device 10 then acquires the infection estimation model (step S304) . Specifically, the estimation unit 133 acquires the infection estimation model which is stored in the memory unit 120. Furthermore, the estimation unit 133 acquires, from the memory unit 120, the cultivation information including the three-factor information for estimating the infection risk, as required.

The information processing device 10 then generates infection risk estimation information on the basis of the infection estimation model (step S305) . Specifically, the estimation unit 133 uses, as input data, information relating to the three factors including the feature value generated by means of the feature value conversion unit 131, and inputs this input data to the infection estimation model to obtain an infection risk estimation result from the infection estimation model. This estimation result serves as the infection risk estimation information. It should be noted that the input data may be information comprising only the feature value, or it may be information in which the feature value is combined with the three-factor information that has not undergone feature value conversion.

The information processing device 10 then stores the generated infection risk estimation information (step S306). Specifically, the estimation unit 133 causes the memory unit 120 to store the generated estimation information.

### <2.3. Summary of the mode of embodiment of the present invention>

According to a mode of embodiment of the present invention, the information processing device 10 thus generates a feature value by performing feature value conversion of at least any item of information among items of information relating to each of three factors in disease outbreak in produce, namely the pathogen factor, host factor and environment factor. Additionally, the information processing device 10 estimates the infection risk of the produce on the basis of the infection estimation model which is used in order to estimate the infection risk of the produce and is generated on the basis of the machine learning algorithm, using the information relating to the three factors including the feature value as input data. The information processing device 10 thus estimates the infection risk of the produce on the basis of more suitable cultivation information, namely the information relating to the three factors, and can therefore estimate the infection risk with greater accuracy.

Furthermore, it has hitherto been difficult to collect information relating to all three factors in disease damage and to utilize this information for estimating disease damage. Furthermore, disease damage occurs due to a large number of elements among the three factors, but it has also been difficult to obtain all of this large number of elements. For example, when the infection risk is estimated by using only information acquired by sensor data, there are limits to improving the accuracy of the estimation. Furthermore, if there is an endless increase in the types of data collected, this entails running costs, such as recording media for recording the information and arithmetic processing devices for predicting the infection risk, etc.

Meanwhile, recent advances in artificial intelligence (AI) technology have made it possible to perform analyses using a large number of elements. Furthermore, the spread of communication terminals such as smartphones has made it possible for cultivation information including information relating to the three factors, etc. to be more easily input to a communication terminal by a user.

In this mode of embodiment, the user U1 inputs the cultivation information to the information processing terminal 20, and the information processing device 10 uses this cultivation information to estimate the infection risk by using the infection estimation model which is generated on the basis of a machine learning algorithm. This makes it possible not only to improve the accuracy of estimating the infection risk, but also to estimate the infection risk by means of a simpler and less costly method.

Furthermore, the machine learning unit 132 according to this mode of embodiment updates the infection estimation model on the basis of the machine learning algorithm, while using information relating to the three factors including the feature value as input data. Furthermore, the estimation unit 133 estimates the infection risk of the produce on the basis of the updated infection estimation model. In other words, the infection estimation model according to this mode of embodiment is automatically updated to a more accurate infection estimation model. As a result, the information processing device 10 can be made to update the infection estimation model autonomously. This makes it possible to reduce the time and cost involved in improving the infection estimation model, without any direct human intervention in improving the model. Accordingly, it is possible to improve the correctness of estimating the infection risk while keeping costs down.

Furthermore, the information relating to the pathogen factor according to this mode of embodiment includes history information relating to the history of occurrences of disease damage in the produce. The history information is very important information for estimating the infection risk. More specifically, the history information includes the type of disease damage which actually occurred in the produce and the date on which the outbreak of disease occurred, etc., so the history information is strongly related to infection of the produce. The information processing device 10 can therefore estimate the infection risk more accurately by estimating the infection risk on the basis of the history information.

Furthermore, the history information according to this mode of embodiment includes the period information relating to the length of the period in which disease damage occurred in the produce. The period information is important information for estimating the infection risk. For example, the infection risk is estimated as higher when disease damage occurs for a longer period of time. It is therefore possible to estimate the infection risk with greater accuracy by using the period information.

Furthermore, the information relating to the history of occurrences of disease damage may also include frequency information relating to the frequency with which disease damage occurs in the produce. The frequency information may serve as important information for estimating the infection risk. For example, the infection risk may be estimated as high when the frequency with which disease damage occurs is high. Furthermore, it can be estimated that the infection risk is high when the frequency with which disease damage occurs is gradually increasing. The infection risk can thus be estimated with greater accuracy by using the information relating to the frequency with which disease damage occurs in the produce.

The information relating to the history of occurrences of disease damage may also include the length information relating to the length from a point in time on a time axis at which disease damage occurred in the produce until a point in time at which the estimation unit estimates the infection information. The length information may serve as important information for estimating the infection risk. For example, the infection risk may be estimated as higher when the period from an outbreak of disease damage until the infection risk is estimated is shorter. The infection risk can thus be estimated with greater accuracy by using the length information.

Furthermore, the information relating to the host factor may include information relating to resistance of the produce to disease damage, and the information relating to the environment factor may include information relating to at least either of humidity or temperature in the space in which the produce is being cultivated. These items of information are important information for estimating the infection risk. The resistance of the produce to disease damage is a characteristic having a relatively large effect on infection among host factors. Furthermore, humidity and temperature are indicators having a relatively large effect on infection among environment factors. The infection risk can therefore be estimated with greater accuracy by using these items of information.

The estimation unit 133 may estimate the infection risk of the produce on the basis of a past estimation result of the infection risk estimated on the basis of the infection estimation model. For example, the estimation unit 133 may estimate the infection risk on the basis of the infection estimation model by using a past estimation result of the infection risk and the cultivation information, etc. which was used in order to estimate that infection risk. The infection risk can thus be estimated with greater accuracy by using past estimation results of the infection risk.

The machine learning unit 132 may update the infection estimation model on the basis of the machine learning algorithm while using the past estimation result as input data. An infection estimation model based on a past estimation result is generated by this means. The past estimation result is reflected in this infection estimation model, so the estimation unit 133 can estimate the infection risk with greater accuracy by using this infection estimation model.

### <3. Software configuration of the information processing device according to a mode of embodiment of the present invention>

A mode of embodiment of the present invention was described above. The processing in the information processing device 10 described above is implemented by collaboration of software, and hardware of the information processing device 10 which will be described below.

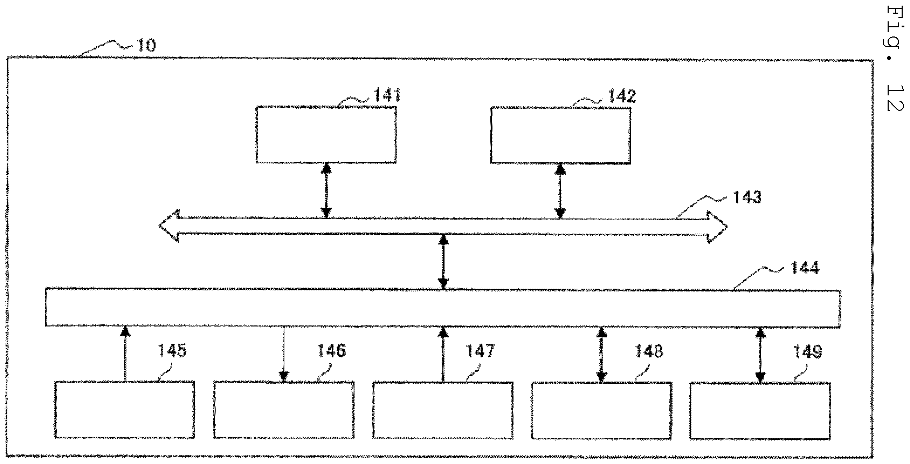

Fig. 12 is an explanatory diagram showing a hardware configuration of the information processing device 10 according to a mode of embodiment of the present invention. As shown in fig. 12, the information processing device 10 comprises: a processor 141, a memory 142, an internal bus 143, an interface 144, an input device 145, an output device 146, a storage device 147, a connection port 148, and a communication module 149.

### (Processor)

The processor 141 functions as an arithmetic processing device and a control device, and implements the functions of the processing unit 130 (feature value conversion unit 131, machine learning unit 132, estimation unit 133, display control unit 134) by collaborating with various types of programs. The processor 141 uses control circuitry to operate various logical functions of the information processing device 10 by implementing programs stored in another storage medium such as the memory 142 or the storage device 147. For example, the processor 141 may be a central processing unit (CPU) or a graphics processing unit (GPU). Moreover, the processor 141 may be a microprocessor.

### (Memory)

The memory 142 stores programs or computation parameters, etc. used by the processor 141, and implements the function of the memory unit 120. For example, the memory 142 includes a random access memory (RAM) and a read only memory (ROM), and temporarily stores programs used for implementation by the processor 141 or parameters which vary appropriately during implementation, etc. It should be noted that an external storage device may also be used as a part of the memory 142, this external storage device being connected via the connection port 148 or the communication module 149.

It should be noted that the processor 141 and the memory 142 are interconnected by means of the internal bus 143 which comprises a CPU bus or the like. Furthermore, the interface 144 connects the internal bus 143, the input device 145, the output device 146, the storage device 147, the connection port 148, and the communication module 149.

### (Input device)

The input device 145 comprises an input means for input of information, and an input control circuit for generating an input signal on the basis of the input and outputting the input signal to a CPU 131, the input device 145 implementing the function of an operating unit. For example, the input means may be a button, a switch, a lever or a microphone, etc. Various types of data are input to the information processing device 10 and processing operations are instructed by operation of the input device 145.

### (Output device)

The output device 146 outputs sound or light, etc. on the basis of an output signal, and implements the function of an output unit. For example, the output device 146 includes a sound output device such as a speaker or headphones, and a display device such as a lamp employing a light-emitting diode (LED) or the like, a liquid crystal display (LCD) device, an organic light-emitting diode (OLED) device, and a projector device, etc.

### (Storage device)

The storage device 147 is a device used for data storage. The storage device 147 may include a recording device for recording data on a recording medium, a readout device for reading out the data from the recording medium, and an erasure device for erasing data recorded on the recording medium, etc. The storage device 147 stores programs implemented by the CPU 131, and various types of data.

### (Connection port)

The connection port 148 is a port for directly connecting equipment to the information processing device 10. For example, the connection port 148 may be a universal serial bus (USB) port, an IEEE 1394 port, an RS-232C port, or a high-definition multimedia interface (HDMI (registered trademark)) port, etc. By connecting external equipment to the connection port 148, data may be exchanged between the information processing device 10 and the external equipment.

### (Communication module)

The communication module 149 is a communication device for connecting to a network, and implements the function of the communication unit 110. For example, the communication module 149 may be a wireless local area network (LAN)-compatible communication device or it may be a 3G- or LTE-compatible communication device. Furthermore, the communication module 149 may be a wired communication-compatible device for performing wired communication.

### <4. Supplement>

A preferred mode of embodiment of the present invention was described in detail above with reference to the appended drawings, but the present invention is not limited by this example. Persons having normal knowledge in the technical field to which the present invention belongs will obviously be able to conceive of various modified examples or revised examples within the scope of the technical concept disclosed in the claims, and any such modified or revised examples should naturally be understood as belonging to the technical scope of the present invention.

For example, in the abovementioned mode of embodiment, the information processing device 10 estimates the infection risk as infection information on the basis of the cultivation information. This is not limiting, and the information processing device 10 may equally estimate information relating to an occurrence of disease damage in produce as the infection information, on the basis of the cultivation information. More specifically, the information processing device 10 may estimate the date or probability of an occurrence of disease damage in the produce, or the type of such disease damage, etc.

Furthermore, the information described as being generated by means of the input unit 210 in the abovementioned mode of embodiment may equally be automatically generated without a user operation. For example, the disease damage information may be generated by using information obtained from sensors such as an imaging sensor and a moisture amount sensor.

Furthermore, the items of information described in the abovementioned mode of embodiment may be either quantitative information or qualitative information.

Furthermore, in the steps indicated in the flowcharts of fig. 8-fig. 11 in the abovementioned mode of embodiment, the processing which is performed in time series in the stated order need not, of course, necessarily be performed in time series, and processing which is implemented in parallel or individually is also included. Furthermore, it also goes without saying that the order of the steps processed in time series may also be appropriately modified, depending on the situation.

For example, in the abovementioned mode of embodiment, the information processing terminal 20, the sensor node 30, and the weather information server 40 send various types of information to the information processing device 10 in that order in steps S101-S103. Of course, this is not limiting, and the order in which the information processing terminal 20, the sensor node 30, and the weather information server 40 send the various types of information may be appropriately switched. Furthermore, the information processing terminal 20, the sensor node 30, and the weather information server 40 may also send the various types of information multiple times, as required. Furthermore, the abovementioned mode of embodiment describes an example in which the estimation processing is implemented by means of the information processing device 10 before the request information from the information processing terminal 20 is sent to the information processing device 10. This is not limiting, and the estimation processing may equally be implemented in accordance with a request for transmission of the information.

Furthermore, the abovementioned mode of embodiment describes an example in which the estimation result is presented to the user, but a notification based on the estimation result may equally be provided to the user. For example, the information processing device 10 sends alert information indicating that there is a risk of infection to the information processing terminal 20 in accordance with the magnitude of the calculated infection risk. On receiving this alert information, the information processing terminal 20 notifies receipt of the alert information to the user by using a sound or vibration, etc., and displays an image indicating that there is a risk of infection.

Furthermore, the weather information acquired by the weather information server 40 may equally be used for estimating the infection risk or updating the infection estimation model, etc. The weather information includes predicted weather information for the future, for example. The estimation unit 133 may estimate the predicted infection risk for the future by using the predicted weather information.

Furthermore, the estimation unit 133 according to this mode of embodiment estimates the infection risk at two levels (high or low) on the basis of the infection estimation model. This is not limiting, and the estimation unit 133 may equally estimate the infection risk at three or more levels on the basis of the infection estimation model, or may perform an evaluation by using numerical values or the like.

Furthermore, the information processing terminal 20 according to this mode of embodiment outputs the infection information estimation result as an image by means of the display unit 240. This is not limiting, and the information processing terminal 20 may equally output the infection information estimation result as a voice. In this case, the information processing terminal 20 comprises, as an output unit, a voice output device for outputting the infection information estimation result as a voice.

Furthermore, operations may also be performed by a computer program for causing the hardware built into the information processing device 10 to demonstrate functions equivalent to the abovementioned functional configurations of the information processing device 10. Furthermore, a memory medium on which this computer program is stored is also transmitted.

### Key to Symbols

- 10...: Information processing device
110... Communication unit
120... Memory unit
130... Processing unit
131... Feature value conversion unit
132... Machine learning unit
133... Estimation unit
134... Display control unit
- 20...: Information processing terminal
210... Input unit
220... Control unit
230... Communication unit
240... Display unit
- 30...: Sensor node
- 40...: Weather information server

## Claims

1. An information processing device (10) comprising:
a feature value conversion unit (131) for generating a feature value by performing feature value conversion of at least any item of information among items of information relating to each of three factors in disease outbreak in produce, namely a pathogen factor, host factor and environment factor; and
an estimation unit (133) for estimating infection information relating to infection of the produce on the basis of an infection estimation model which is used in order to estimate the infection information of the produce and is generated on the basis of a machine learning algorithm, using the information relating to the three factors including the feature value as input data.

2. The information processing device (10) as claimed in claim 1, further comprising a first machine learning unit (132) which uses the information relating to the three factors including the feature value as input data and updates the infection estimation model on the basis of the machine learning algorithm,
wherein the estimation unit (133) estimates the infection information on the basis of the updated infection estimation model.

3. The information processing device (10) as claimed in claim 1 or 2, wherein the information relating to the pathogen factor includes information relating to a history of occurrences of disease damage in the produce.

4. The information processing device (10) as claimed in claim 3, wherein the information relating to a history of occurrences of disease damage includes period information relating to a period in which disease damage has occurred in the produce.

5. The information processing device (10) as claimed in claim 3 or 4, wherein the information relating to a history of occurrences of disease damage includes frequency information relating to a frequency with which disease damage occurs in the produce.

6. The information processing device (10) as claimed in any one of claims 3 to 5, wherein the information relating to a history of occurrences of disease damage includes length information relating to a length from a point in time on a time axis at which disease damage occurred in the produce until a point in time at which the estimation unit (133) estimates the infection information.

7. The information processing device (10) as claimed in any one of claims 1 to 6, wherein the information relating to the host factor includes information relating to resistance of the produce to disease damage, and
the information relating to the environment factor includes information relating to at least either of humidity or temperature in a space in which the produce is being cultivated.

8. The information processing device (10) as claimed in any one of claims 1 to 7, wherein the estimation unit (133) estimates the infection information on the basis of a past estimation result of the infection information estimated on the basis of the infection estimation model.

9. The information processing device (10) as claimed in claim 8, further comprising a second machine learning unit (132) which uses the past estimation result as input data, and updates the infection estimation model on the basis of the machine learning algorithm,
wherein the estimation unit (133) estimates the infection information on the basis of the updated infection estimation model.

10. An information processing system (1) comprising:
an input unit (210) which receives, as input, information relating to each of a pathogen factor, host factor and environment factor with respect to disease in produce;
a feature value conversion unit (131) for generating a feature value by performing feature value conversion of at least any item of information among items of information relating to each of three factors in disease outbreak in produce, namely the pathogen factor, host factor and environment factor;
an estimation unit (133) for estimating infection information relating to infection of the produce on the basis of an infection estimation model which is used in order to estimate the infection information and is generated on the basis of a machine learning algorithm, using the information relating to the three factors including the feature value as input data; and
an output unit (240) for outputting a result estimated by the estimation unit (133).
